# EUROPEAN PATENT APPLICATION

(11) **EP 4 822 229 A1**
(43) Date of publication of application: **14.10.2026**
(21) Application number: 26168753.7
(22) Date of filing: 27.03.2026
(51) Int. Cl.: F16L 11/20, F16L 33/30, F16L 59/00

(54) **CONNECTION HAVING CLOSED LONGITUDINAL CHANNELS, FOR A FLUID TO BE TRANSPORTED**

(30) Priority: 07.04.2025 IT 202500007416
(71) Applicant: HUTCHINSON S.r.l., 10098 Rivoli (TO) (IT)
(72) Inventor: PASTENA, Davide, 10139 Torino (IT); MORETTI, Nicola, 10098 RIVOLI (TO) (IT); CARATTO, Diego, 10098 Rivoli (TO) (IT)
(74) Representative: Vitillo, Giuseppe

(57) **Abstract**

Connection (20) for a fluid to be transported, in particular in a motor vehicle; said connection (20) comprising a pipeline (10) including: an inner pipe (12) configured to be crossed by said fluid to be transported, and a sheath (15). The sheath (15) comprises: an outer pipe (14), and a plurality of tubular portions (18) defining channels (16). The tubular portions (18) are radially interposed between the inner pipe (12) and the outer pipe (14), and are mutually spaced apart, thus forming interspaces (17). The connection (20) comprises: a connector (22) fluidically connected to the inner pipe (12), and comprising a male portion (24) inserted in the inner pipe (12); a closing means (26) for closing the channels (16) and the interspaces (17) at their axial ends, wherein the closing means (26) is located at one end of the pipeline (10) whereto the connector (22) is mounted.

## Description

### Technical field

The present invention relates to a connection for a fluid to be transported, in particular in a motor vehicle. **Technical background** Particularly in the automotive field, pipelines are known which are used for transporting a fluid, e.g. in selective catalytic reduction (SCR) systems.

According to the prior art, such a pipeline comprises an inner pipe, configured to be crossed by a fluid to be transported, and an outer pipe, which surrounds the inner pipe, thus forming a coating sheath. Such a pipeline is described, for example, in document EP 2666985, wherein the coating sheath comprises a plurality of internal grooves. In addition, in said document the pipeline is equipped with a device for heating the transported fluid, in particular a heating resistor wire applied to the inner pipe. One drawback lies in the fact that the walls that define the groove will tend to collapse while manufacturing the pipeline, in particular during the thermoforming process. Moreover, the resistor wires may, since the sheath is not in close contact with them, move from their initial position and create uneven heating conditions.

US 6116290 concerns a pipe insulation system wherein between an outer pipe and an inner pipe there are mutually adjacent circular channels. One drawback of such a system lies in the fact that the excessive number of channels results in higher production costs, particularly in the variant wherein such channels are buried in insulating material. Moreover, the production process is not efficient.

CN 102588710 concerns a pipe insulation system wherein between an outer pipe and an inner pipe there are mutually adjacent circular channels. One drawback of such a system lies in the fact that the excessive number of channels, the use of adhesive for joining them, and the vacuum sealing of the channels result in higher production costs. Moreover, the production process is not efficient.

CN 107573573 A concerns a pipe insulation system wherein between an outer pipe and an inner pipe there are radial protrusions belonging to the outer pipe. One drawback of such a system lies in the fact that the radial protrusions are solid, thus permitting heat transfer. Moreover, the radial protrusions, especially when they are thin, are at risk of collapsing when the pipe is bent, thus jeopardizing the insulation.

EP 2094481 B1 concerns an insulation system for pipes for cold substances, wherein between an outer pipe and an inner pipe there are circular channels which are mutually spaced apart. One drawback of such a system lies in the fact that such a system is not applicable to vehicles, and that the presence of a third pipe results in higher production costs. Moreover, the production process is not efficient.

EP 4420871 A1 concerns a pipeline for fluids, which comprises an outer pipe and an inner pipe, with circular channels in between. One drawback of such a system lies in the fact that, if the channels are open at their ends, the air hitting said pipeline can enter the channels, thereby reducing the thermal insulation of the pipeline.

### Summary of the invention

It is one object of the present invention to provide a pipeline which can overcome the drawbacks of the prior art.

According to the present invention, this object is achieved through a connection having the technical features set out in the appended independent claim.

In particular, such technical features result in a connection with improved mechanical strength, which will maintain its insulating properties even after having been bent, thus ensuring better thermal insulation.

Another advantage lies in the fact that the connection can be manufactured easily, quickly and at low cost, while at the same time ensuring good thermal insulation.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided herein merely as a non-limiting example and referring, in particular, to the annexed drawings as summarized below.

### Brief description of the drawings

Figure 1 is a perspective view of a pipeline made in accordance with an exemplary embodiment of the present invention.
Figure 2 is a cross-sectional view of the pipeline shown in Figure 1.
Figure 3 is a perspective view of a longitudinal section of the pipeline shown in Figure 1.
Figure 4 is a cross-sectional view of a pipeline made in accordance with an alternative embodiment of the present invention.
Figure 5 is a cross-sectional view of a pipeline made in accordance with another alternative embodiment of the present invention.
Figure 6 is a partial perspective view (wherein the outer pipe is not shown) of a pipeline wherein the tubular portions are arranged in a spiral fashion, according to a particular embodiment thereof.
Figure 7 is a cross-sectional view of the pipeline shown in Figure 6, showing also the outer pipe.
Figure 8 is a partial longitudinal sectional view (wherein the inner pipe is not shown) of the pipeline shown in Figures 6 and 7.
Figure 9 is a partial perspective view (wherein the outer pipe is not shown) of a pipeline wherein the tubular portions are arranged in a spiral fashion, according to a different embodiment thereof.
Figure 10 is a cross-sectional view of the pipeline shown in Figure 9, showing also the outer pipe.
Figure 11 is a partial longitudinal sectional view (wherein the inner pipe is not shown) of the pipeline shown in Figures 9 and 10.
Figure 12 is a perspective view of a connection made in accordance with an exemplary embodiment of the present invention.
Figure 13 is an exploded perspective view of the connection of Figure 12.
Figure 14 shows a longitudinal section of the connection of Figure 12.
Figure 15 is a perspective view of a connection made in accordance with a second exemplary embodiment of the present invention.
Figure 16 is an exploded perspective view of the connection of Figure 15.
Figure 17 shows a longitudinal section of the connection of Figure 15.
Figure 18 is a perspective view of a connection made in accordance with a third exemplary embodiment of the present invention.
Figure 19 is an exploded perspective view of the connection of Figure 18.
Figure 20 shows a longitudinal section of the connection of Figure 18.

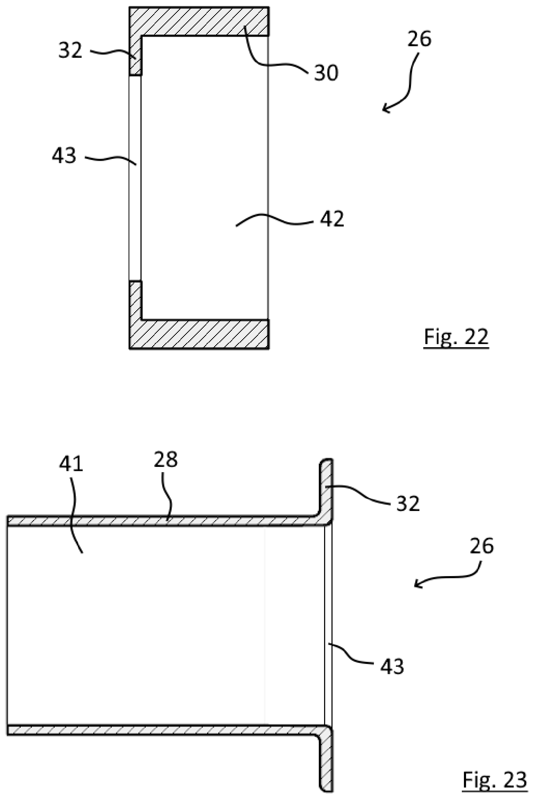

Figures 21, 22, 23 show longitudinal sections of a closing means according to the embodiments shown in Figures 12, 15, and 18, respectively.

### Detailed description of the invention

With reference to the drawings, numeral 20 designates as a whole a connection for a fluid to be transported, which is made in accordance with an exemplary embodiment of the present invention.

For example, connection 20 can be used in a motor vehicle. In particular, connection 20 may find application in a selective catalytic reduction (SCR) system, a battery or engine cooling system, an air conditioning system of the passenger compartment, a fuel or fuel-vapour transport system, or a water injection system.

Connection 20 comprises a pipeline 10 including an inner pipe 12 configured to be crossed by the fluid to be transported. Furthermore, pipeline 10 includes a sheath 15 comprising:
- an outer pipe 14, and
- a plurality of tubular portions 18 defining channels 16. Tubular portions 18 are: radially interposed between inner pipe 12 and outer pipe 14, and mutually spaced apart, thus forming interspaces 17.

Connection 20 comprises a connector 22 fluidically connected to inner pipe 12, and comprising a male portion 24 inserted in inner pipe 12.

Connection 20 comprises a closing means 26 for closing channels 16 and interspaces 17 at their axial ends. Closing means 26 is located at, in particular mounted to, one end of pipeline 10 whereto connector 22 is mounted.

In more detail, connection 20 includes a pipeline 10 including: inner pipe 12 and sheath 15. Therefore, pipeline 10 includes outer pipe 14, channels 16, and interspaces 17. Pipeline 10 is, therefore, a tubular part of connection 20.

Preferably, tubular portions 18 extend in a prevalently longitudinal direction of said outer pipe 14.

Preferably, tubular portions 18 are made as one piece with outer pipe 14.

In particular, channels 16 have a circular cross-section.

In particular, interspaces 17 are radially interposed between inner pipe 12 and outer pipe 14.

In more detail, interspaces 17 and channels 16 alternate circumferentially.

Sheath 15 comprises a plurality of tubular portions 18, each one of which defines a respective channel 16. Tubular portion 18 has, therefore, an inner surface defining channel 16, and an outer surface facing towards, in particular touching, inner pipe 12. Sheath 15 and tubular portions 18 are preferably made as one piece, in particular by extrusion.

In particular, the cross-section of channels 16 is circular. Such circular tubular portions 18 offer the advantage of reducing to a minimum the contact, and the resulting thermal exchange, between inner pipe 12 and outer pipe 14, while at the same time ensuring good structural strength because such tubular portions 18 make it possible to bend sheath 15 without channels 16 collapsing. Since channels 16 will not collapse, the internal cavity will remain intact and the thermal insulation provided by the gas contained in such cavities will remain efficient. Moreover, the circular shape of tubular portion 18 minimizes the contact area (in particular, in a cross-sectional view) between tubular portion 18 itself and inner pipe 12, thereby ensuring good thermal insulation. In more detail, tubular portions 18 are in contact with said inner pipe 12.

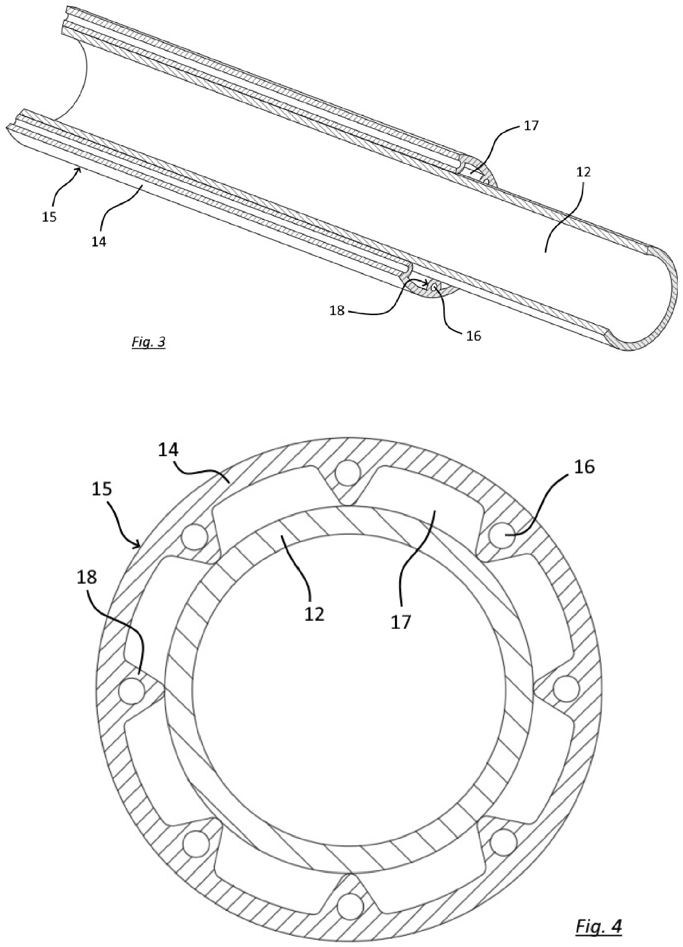

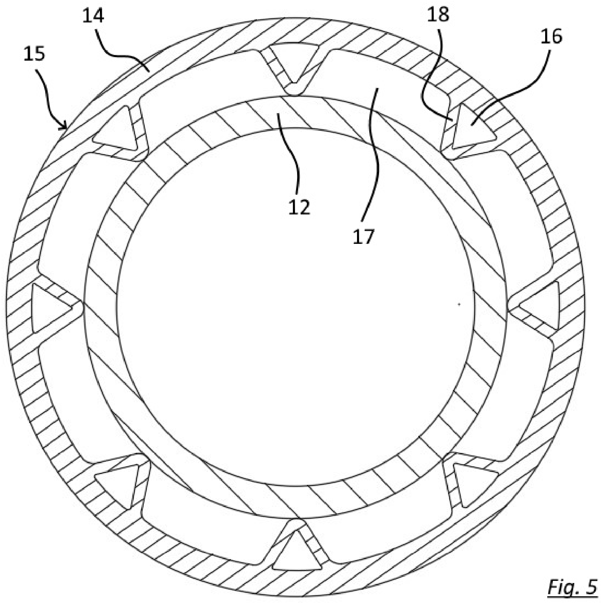

The contact area between tubular portions 18 and inner pipe 12 can also be minimized through the use of tubular portions 18 having a cross-section other than circular. For example, tubular portions 18 may have a substantially triangular outer surface, as shown in Figs. 4 and 5. Such triangles defining channels 16 have one corner or vertex touching inner pipe 12. According to some possible variants, the outer and inner surfaces of tubular portion 18 may have different cross-sections. For example, the shape of the outer surface of tubular portion 18 may be substantially triangular, while the shape of the inner surface, and hence that of channel 16, may be circular, as shown in Fig. 4. In Fig. 5, on the contrary, also channels 16 have a triangular cross-section. In such variants as well, sheath 15 provides good flexural strength.

Regions of thermal insulation around inner pipe 12 are also created by interspaces 17, defined by the circumferential space between tubular portions 18. Such spaced-apart channels 16 give the advantage of reducing the production cost and the weight of sheath 15 (since it is not necessary to form many channels 16 in mutual contact), while ensuring good thermal insulation due to the presence of numerous empty spaces (i.e. interspaces 17 and channels 16).

A further advantage offered by the invention is the possibility of avoiding the application of insulating foam on the outside pipeline 10, which would prevent the use of clamps or other fastening means. Moreover, foam has poor abrasion resistance. Pipeline 10 of the invention, with outer pipe 14 made of relatively stiff and solid material, is resistant to abrasion and can be mounted to other components of a vehicle through suitable fastening means.

Preferably, channels 16 and interspaces 17 contain gas, conveniently air. The gas or air performs a thermal insulation function. Air offers good thermal insulation, and makes the production process both simple and economical.

Preferably, in a cross-sectional view, width L of interspaces 17 is greater than diameter d of channels 16. In more detail, width L, which is the distance between the outer surfaces of two adjacent tubular portions 18, is greater than diameter d of channels 16. Diameter d of channel 16 is defined by the inner surface of tubular portion 18. That is, L>d. It is thus possible to have a limited number of channels 16, thus ensuring good thermal insulation combined with low production costs and satisfactory mechanical strength. In the example, all channels 16, all tubular portions 18, and all interspaces 17 have the same shape and size. In particular, width L of interspaces 17 is greater than width D of the outer surface of tubular portion 18. In more detail, width L, which is the distance between the outer surfaces of tubular portions 18 of two adjacent channels 16, is greater than outside diameter D defined by the outer surfaces of tubular portions 18 of a channel 16. That is, L>D.

In the example, channels 16 are arranged substantially circumferentially around inner pipe 12. In particular, channels 16 are substantially equally spaced apart angularly from each other. In particular, pipes 12 and 14 have a circular cross-section. In the example, the outer surface of outer pipe 14 is substantially smooth.

In particular, sheath 15 is made by extrusion around inner pipe 12. In other words, sheath 15 is directly fabricated by extrusion around inner pipe 12 in a continuous process (known as co-extrusion), thus avoiding the need for fitting sheath 15 over inner pipe 12 at a later time, which would imply higher costs and longer production times.

In particular, channels 16 are situated in a radially internal position relative to outer pipe 14. Such channels 16 are radially interposed between outer pipe 14 and inner pipe 12. In more detail, tubular portions 18, which define channels 16, touch the outer surface of inner pipe 12.

According to an illustrative embodiment of the present invention, sheath 15 is made of polymeric material, e.g. an elastomer, in particular a thermoplastic elastomer, more specifically a vulcanized thermoplastic elastomer, or TPV. Conveniently, inner pipe 12 is also made of polymeric material, which may be either the same material as the one used for sheath 15 or, alternatively, a different material. For example, inner pipe 12 may be made of polyamide, thermoplastic elastomer, or polyolefin. Inner pipe 12 may be obtained by combining two or more layers of different materials. For example, inner pipe 12 may comprise a layer of polyamide and a layer of polyolefin.

As aforementioned, pipeline 10 can be used in a fluid carrier system.

According to an illustrative embodiment of the present invention, the fluid carrier system comprises connection 20 and a fluid source configured to supply a fluid to be transported. Such fluid source is connected either to inner pipe 12 of pipeline 10 or to connector 22.

As aforementioned, connection 20 is so versatile that it can be used in different system types.

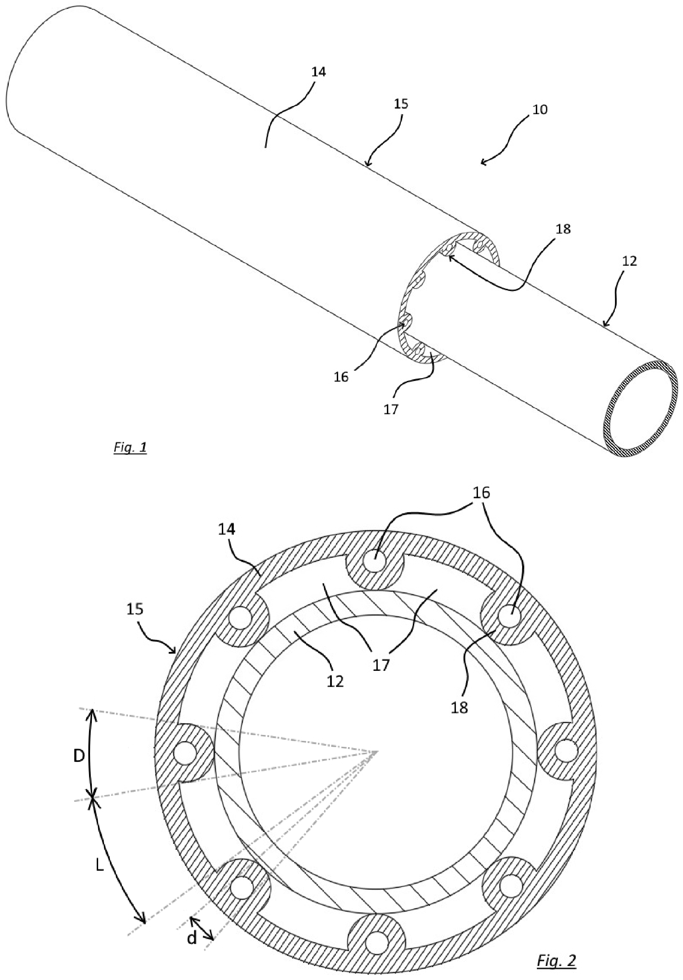

According to the variants shown in Figures 1-5, tubular portions 18 are parallel to a longitudinal axis of pipeline 10. In particular, tubular portions 18 are rectilinear. When pipeline 10 is rectilinear, and therefore its longitudinal axis is rectilinear as well, tubular portions 18 are also rectilinear. In the example, tubular portions 18 are parallel to outer and inner pipes 14, 12. In the examples shown herein, the longitudinal axis of pipeline 10, and particularly of inner and outer pipes 12, 14, is rectilinear. In particular, pipeline 10 is at least partly flexible, so that, in some operating conditions (e.g. in the vehicle), it 10 can be arranged with its longitudinal axis not perfectly rectilinear. For example, pipeline 10 may be arranged with its longitudinal axis at least partly curvilinear. Preferably, pipeline 10 is, in the absence of any external forces, substantially rectilinear.

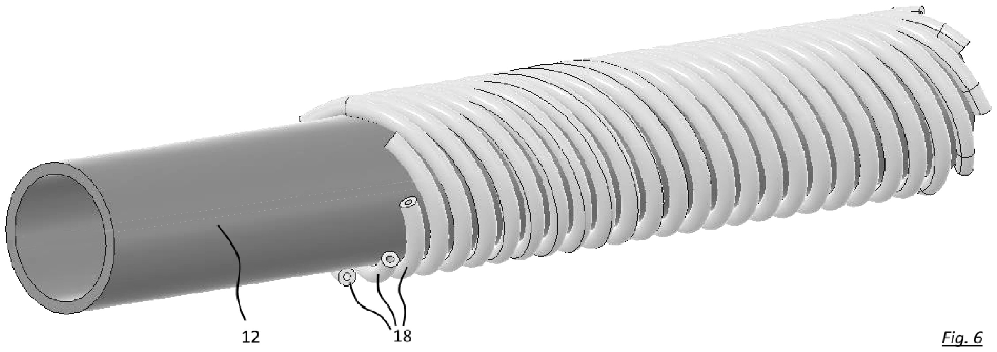

In the variants shown in Figures 6-11, on the other hand, tubular portions 18 are arranged in a spiral fashion relative to a longitudinal axis of pipeline 10. When pipeline 10 is rectilinear, and therefore its longitudinal axis is rectilinear, tubular portions 18 are arranged in a spiral fashion around the axis of pipeline 10. In the example, tubular portions 18 are arranged in a spiral fashion relative to outer and inner pipes 14, 12.

The fact that tubular portions 18 extend prevalently along the longitudinal direction of outer pipe 14 applies both to those variants wherein they 18 are rectilinear and to those variants wherein they 18 are arranged in a spiral fashion around the longitudinal axis of pipeline 10 (particularly around inner pipe 12).

The helical arrangement of tubular portions 18 is advantageous in larger pipelines 10 for the following reasons. As the diameter of pipeline 10 increases, width L of the arc of the portion of outer pipe 14 that separates two (rectilinear) tubular portions 18 may grow to a point where such portion of outer pipe 14 might collapse under its own weight and bend towards inner pipe 12. With helically wound tubular portions 18, no longitudinal "corridors" are created along which the arcs of width L remain unsupported, since the arcs, as large as they may be, will still be supported by the previous and next tracts of the spirals. Therefore, spirals are useful to give stability to the arcs of width L of outer pipe 14, avoiding the need for increasing the number of tubular portions 18 (which constitute thermal bridges) as the diameter of pipeline 10 increases.

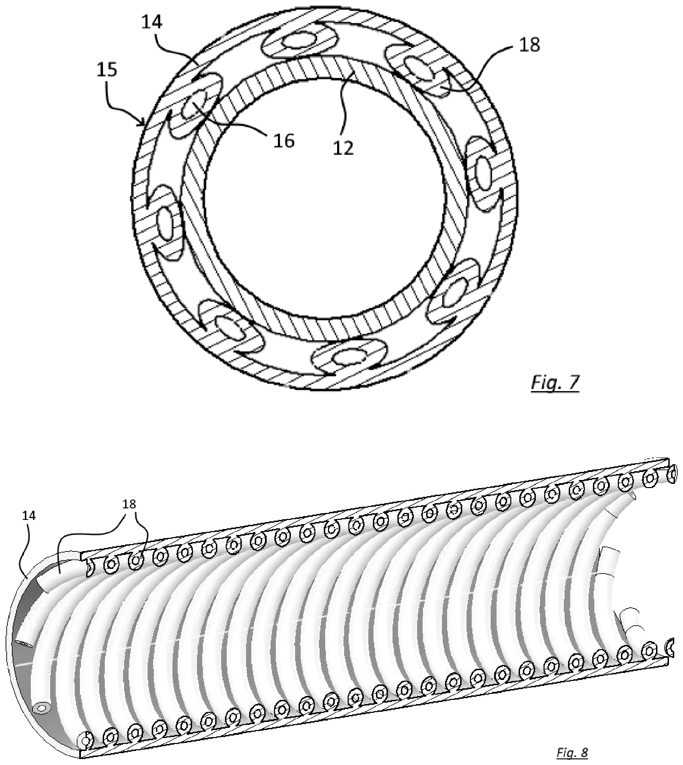

In the first variant with helical tubular portions 18 (Figs. 6-8), when viewed along a plane perpendicular to the direction of the spiral of a tubular portion 18, the cross-section of such tubular portion 18 is circular. Instead, when viewed perpendicularly to the longitudinal axis of pipeline 10 (Fig. 7), the cross-section of tubular portions 18 are not circular (but oval in this example). Tubular portions 18 are not circular also in the cross-sectional view of Figure 8.

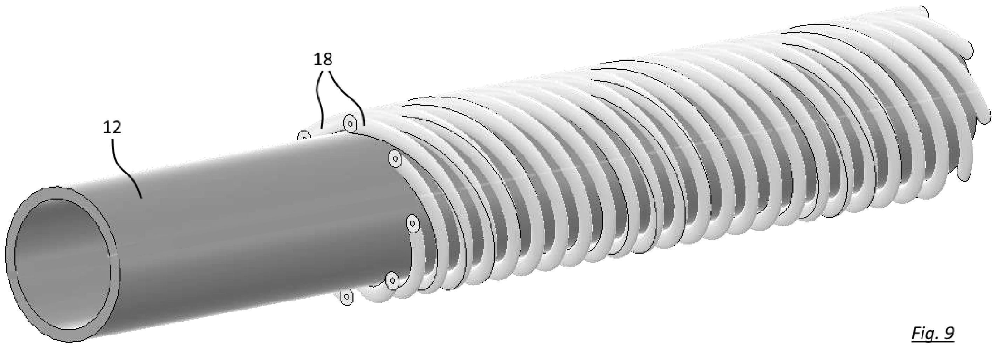

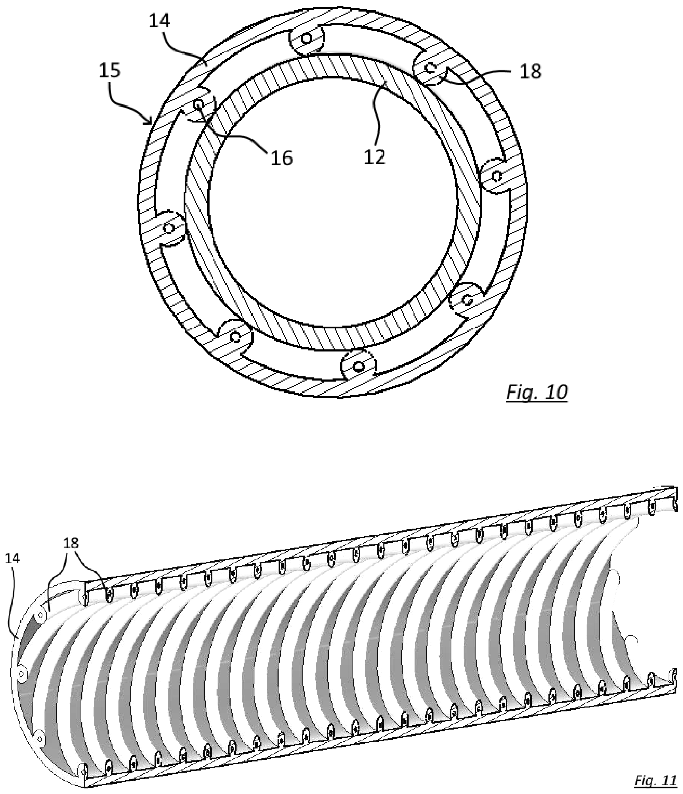

In the second variant with helical tubular portions 18 (Figs. 9-11), when viewed along a plane perpendicular to the longitudinal axis of pipeline 10 (Fig. 10), tubular portions 18 are circular. The cross-section of tubular portions 18 shown in Figure 11 is not circular. The differences between the two above-described variants derives from the production technique, in particular the extrusion technique, respectively employed.

Closing means 26 closes channels 16 and interspaces 17 of sheath 15, preventing any flow of fluids (e.g. air) therein and improving the thermal insulation provided by sheath 15 to the fluid circulating within pipe 12. Pipeline 10 has a first end, shown in the drawings, connected to connector 22 and to closing means 26; it also has a second end, which may optionally be connected to a second connector 22 and to a second closing means 26; alternatively, the second end may be connected to a rigid pipe or to other elements by standard fastening means, e.g. a plastic tie. Preferably, another closing means, not necessarily equal to closing means 26, is mounted to the second end of pipeline 10, which closes channels 16 and interspaces 17 of sheath 15.

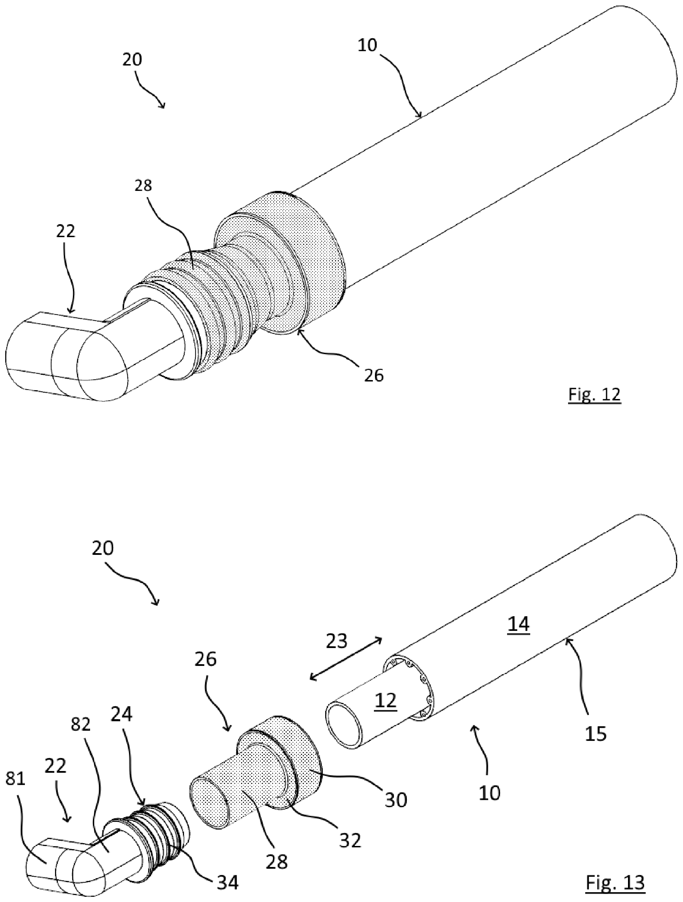

In Figures 12, 13, 15, 16, 18, 19, closing means 26 is shown in grey to make it more easily distinguishable from the other parts of connection 20.

In particular, closing means 26 is in abutment with the ends of channels 16 and interspaces 17, thus sealing them.

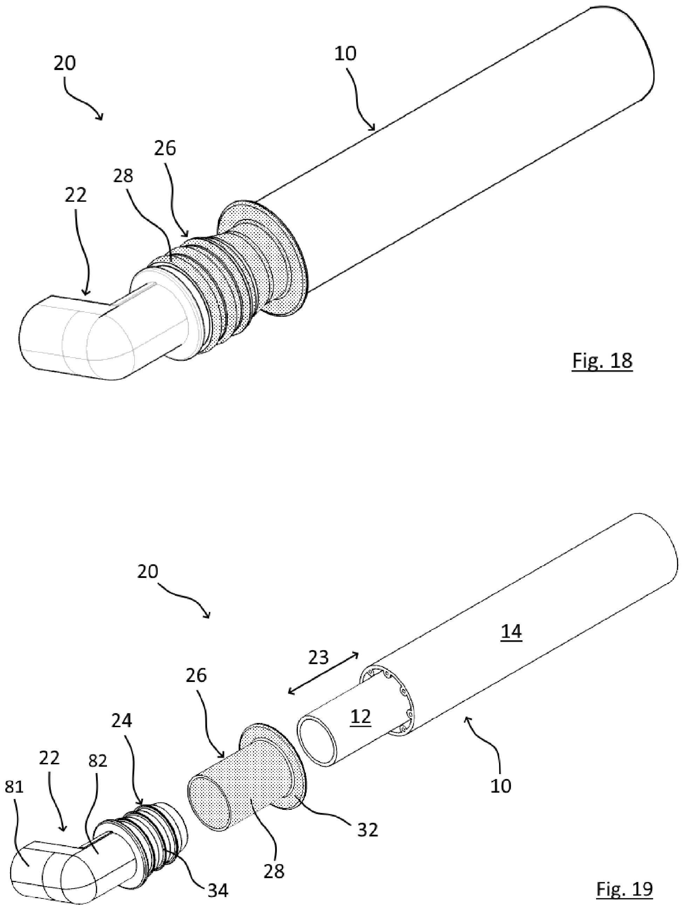

With reference to the embodiments shown in Figures 12 and 18, closing means 26 surrounds part of inner pipe 12 and presses it against male portion 24 of connector 22. Inner pipe 12 is radially interposed between, and in contact with, male portion 24 and closing means 26. In such examples, closing means 26 becomes deformed when male portion 24 is inserted into inner pipe 12, thus improving the mutual fitting between inner pipe 12, male portion 24, and closing means 26. In particular, inner pipe 12 is also deformed when male portion 24 is inserted into it 12.

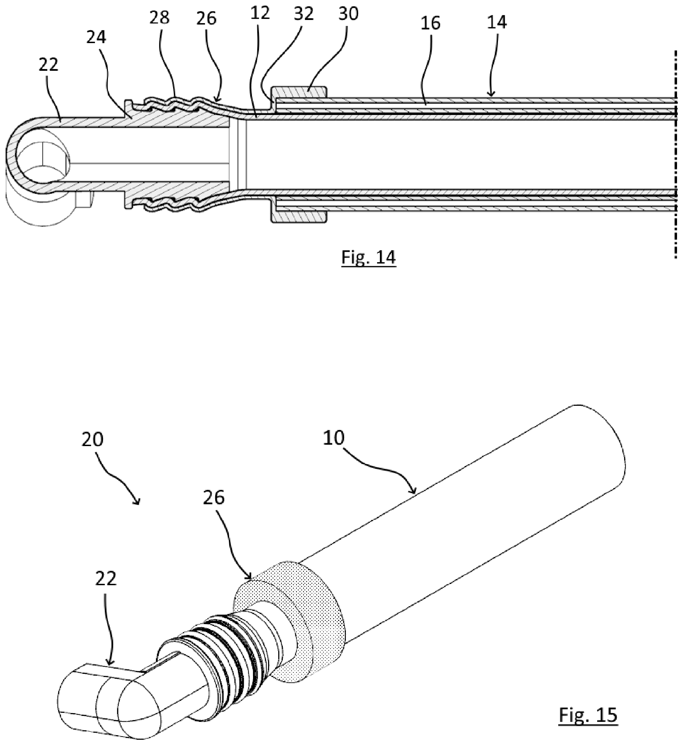

With reference to the variant shown in Figure 15, an end portion of inner pipe 12 surrounds male portion 24, and closing means 26 does not surround said end portion of inner pipe 12 at male portion 24. In particular, inner pipe 12 becomes deformed when male portion 24 is inserted into it 12. Therefore, in the tract where male portion 24 is inserted in inner pipe 12, closing means 26 does not surround inner pipe 12 and does not exert any force on it 12.

In the preferred examples illustrated herein, a part 23 of inner pipe 12 is not covered by sheath 10, and is mounted to male portion 24 of connector 22, in particular through deformation of such part 23 of inner pipe 12. Male portion 24 is inserted, at least partly, into part 23 of inner pipe 12 not surrounded by sheath 15.

Closing means 26 is preferably a hollow element. Preferably, closing means 26 has a cylindrical or annular shape. In particular, it 26 has a hole or cavity crossed by inner pipe 12. Preferably, closing means 26 has a circular cross-section.

In particular, the cross-section of closing means 26 varies along its longitudinal axis.

In particular, the cross-section of closing means 26 has a continuous profile, in particular circular in shape.

In particular, closing means 26 is not intended to come in contact with the fluid flowing between connector 22 and inner pipe 12.

Preferably, closing means 26 is made as one piece. Preferably, closing means 26 is made of polymeric material. For example, it 26 is made by means of a moulding, pressing, or additive manufacturing process.

In the preferred embodiments illustrated herein, closing means 26 is a solid element mounted to the other elements of connection 20. That is, it 26 is solid when applied to the other elements of connection 20.

According to some possible variants (not shown), closing means 26 comprises a fluid or semi-fluid substance (e.g. glue, gel, paste, silicone, etc.) which is applied to the ends of channels 16 and interspaces 17 for sealing them. For example, the fluid or semi-fluid substance is applied to the ends of channels 16 and interspaces 17 and then left to harden, thus becoming solid or prevalently solid. The fluid or semi-fluid substance may be obtained by mixing two or more substances. Preferably, the hardening of the fluid or semi-fluid substance occurs through interaction thereof with humidity, and/or heat, and/or a hardening chemical agent, and/or a catalyst, and/or luminous radiation (e.g. ultraviolet radiation). Once the fluid or semi-fluid substance has hardened, closing means 26 will remain applied to the ends of channels 16 and interspaces 17, thus sealing them and preventing a fluid (e.g. air) from flowing into them.

With reference to the embodiment shown in Figure 12, closing means 26 comprises: a connection tract 28, which surrounds inner pipe 12 at male portion 24, a covering tract 30, which envelops a terminal part of outer pipe 14, and a closing tract 32 that closes channels 16 and interspaces 17. Closing tract 32 connects the other two tracts 28, 30.

In the example, connection tract 28 and covering tract 30 have a cylindrical shape when undeformed (i.e. in the condition shown, by way of example, in Fig. 13). In particular, such tracts 28, 30 have a circular cross-section. Preferably, such tracts 28, 30 are coaxial.

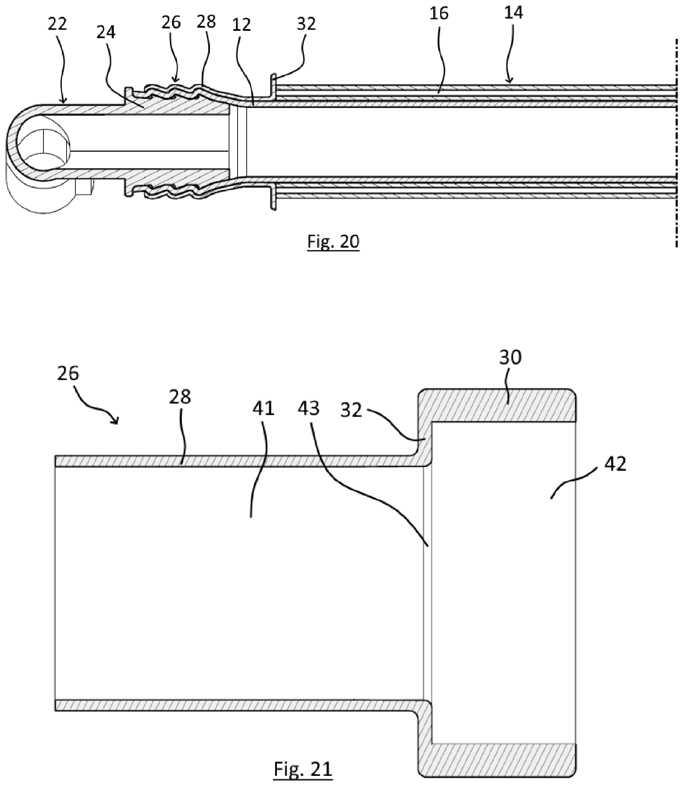

In particular, in the undeformed condition and in a longitudinal sectional view, they 28, 30 have walls that are parallel to an insertion axis. Closing tract 32 is, in a longitudinal sectional view, a wall that is substantially perpendicular to tracts 28, 30. In other words, closing tract 32 is an annular wall extending radially. In the example, the insertion axis is the axis along which closing means 26 is fitted over connector 22 and pipeline 10. In the example, the insertion axis coincides with a longitudinal axis of pipeline 10. In Figures 14, 17, 20, the insertion axis is horizontal.

In the example, tracts 28, 30 define two cavities 41, 42, which, in particular, are cylindrical in the undeformed condition, and which are in communication with each other. Closing tract 32 has a central opening 43, in particular circular in shape, in communication with cavities 41, 42 of tracts 28, 30. In particular, in the undeformed condition, the inside diameter of connection tract 28 is smaller than the inside diameter of covering tract 30. In particular, in the undeformed condition, the outside diameter of connection tract 28 is smaller than the outside diameter of closing tract 32.

Generally, in the particular examples illustrated herein, closing means 26 comprises a closing tract 32 that is in abutment with the ends of channels 16 and interspaces 17, thus closing such channels 16 and interspaces 17.

In the examples shown in Figures 12-20, closing tract 32 has, in a longitudinal section, a flat face that comes in abutment with the ends of channels 16 and interspaces 17, thus closing such channels 16 and interspaces 17.

According to some possible embodiments, closing means 26 may be configured to make channels and interspaces 16, 17 fluid-tight, or else to close them 16, 17 in such a way as to almost completely prevent a flow of fluid through them 16, 17. In particular, closing means 26 is configured to prevent or reduce the air flow through channels and interspaces 16, 17, when pipeline 10 is hit by an air flow.

Preferably, the inside diameter of connection tract 28 is greater than the outside diameter of inner pipe 12. For example, such difference is in the range of 0.1 to 2 mm. This makes it possible to manually install connection tract 28 over an end of inner pipe 12.

Preferably, the inside diameter of covering tract 30 is greater than the outside diameter of outer pipe 14. For example, such difference is in the range of 0.1 to 2 mm. This makes it possible to manually install covering tract 30 over an end of outer pipe 14.

Preferably, the edges of tracts 28, 30 are rounded or bevelled to facilitate the installation over male portion 24 and outer pipe 14.

With reference to the embodiment shown in Figure 15, closing means 26 comprises: a covering tract 30, which surrounds a terminal part of outer pipe 14, and a closing tract 32 that closes channels 16 and interspaces 17. Closing means 26 of the variant shown in Fig. 15 substantially corresponds to closing means 26 of Fig. 12 without connection tract 28.

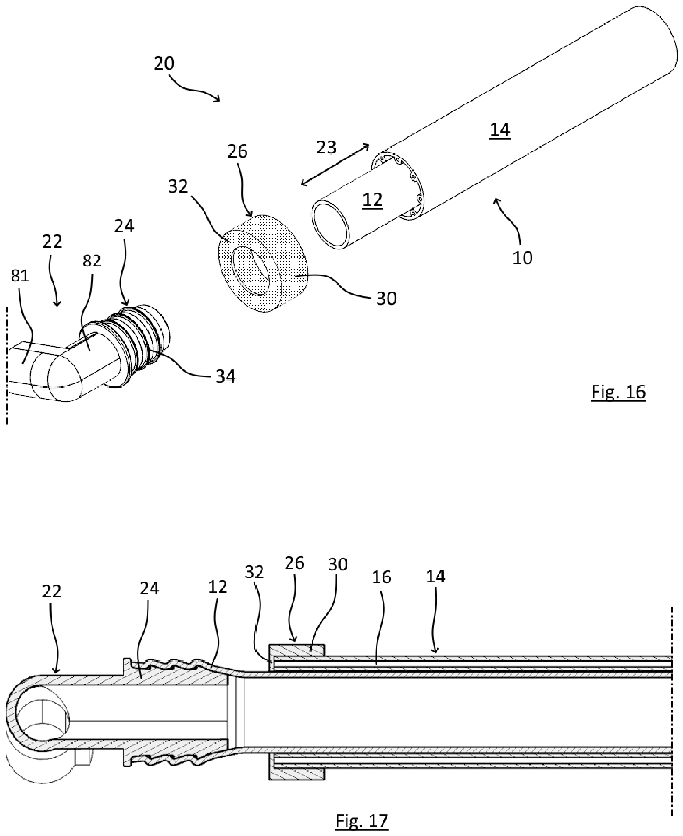

In the example, covering tract 30 has a cylindrical shape (as shown by way of example in Fig. 16). In particular, tract 30 has a circular cross-section.

In particular, in a longitudinal sectional view, tract 30 has walls that are parallel to an insertion axis. Closing tract 32 is, in a longitudinal sectional view, a wall that is substantially perpendicular to tract 30. In other words, closing tract 32 is an annular wall extending radially. In the example, the insertion axis is the axis along which closing means 26 is fitted over connector 22 and pipeline 10. In the example, the insertion axis coincides with a longitudinal axis of pipeline 10. In Figures 14, 17, 20, the insertion axis is horizontal.

In the example, tract 30 defines a cavity 42, in particular cylindrical in shape. Closing tract 32 has a central opening 43, in particular circular in shape, in communication with cavity 42 of tract 30. In particular, the inside diameter of central opening 43 is smaller than the inside diameter of covering tract 30.

Preferably, the inside diameter of central opening 43 is greater than the outside diameter of inner pipe 12. For example, such difference is in the range of 0.1 to 2 mm. This makes it possible to manually install closing means 26 over an end of inner pipe 12.

Preferably, the inside diameter of covering tract 30 is greater than the outside diameter of outer pipe 14. For example, such difference is in the range of 0.1 to 2 mm. This makes it possible to manually install covering tract 30 over an end of outer pipe 14.

Preferably, the edges of tract 30 and of the central opening are rounded or bevelled to facilitate the installation over inner pipe 12 and outer pipe 14.

With reference to the embodiment shown in Figure 18, closing means 26 comprises: a connection tract 28, which surrounds inner pipe 12 at male portion 24, and a closing tract 32 that closes channels 16 and interspaces 17. Closing means 26 of the variant shown in Fig. 18 substantially corresponds to closing means 26 of Fig. 12 without covering tract 30.

In the example, connection tract 28 has a cylindrical shape when it is in the undeformed condition (as shown by way of example in Fig. 19). In particular, tract 28 has a circular cross-section.

In particular, when it is in the undeformed condition, and in a longitudinal sectional view, tract 28 has walls that are parallel to an insertion axis. Closing tract 32 is, in a longitudinal sectional view, a wall that is substantially perpendicular to tract 28. In other words, closing tract 32 is an annular wall extending radially. In the example, the insertion axis is the axis along which closing means 26 is fitted over connector 22 and pipeline 10. In the example, the insertion axis coincides with a longitudinal axis of pipeline 10. In Figures 14, 17, 20, the insertion axis is horizontal.

In the example, tract 28 defines a cavity 41, which, in particular, has a cylindrical shape in the undeformed condition. Closing tract 32 has a central opening 43, in particular circular in shape, in communication with cavity 41 of tract 28. In particular, the inside diameter of central opening 43 is equal to the inside diameter of connection tract 28.

Preferably, the inside diameter of connection tract 28 is greater than the outside diameter of inner pipe 12. For example, such difference is in the range of 0.1 to 2 mm. This makes it possible to manually install connection tract 28 over an end of inner pipe 12.

Preferably, the edges of connection tract 28 are rounded or bevelled to facilitate the installation over male portion 24.

In the examples shown in Figures 12 and 18, connection tract 28 becomes deformed and compresses a terminal tract of inner pipe 12 on male portion 24 of connector 22. In such examples, a part of inner pipe 12 is interposed between, and in contact with, connection tract 28 and male portion 24.

In the examples shown in Figures 12 and 15, sheath 15 (in particular outer pipe 14, tubular portions 18, channels 16, interspaces 17) is radially interposed between - and, in particular, in contact with - covering tract 30 and inner pipe 12.

Optionally, fixing means (e.g. protrusions) may be provided on the radially internal surface of covering tract 30 to increase the interference with sheath 15 of pipeline 10, in particular with outer pipe 14 of pipeline 10. Preferably, such fixing means create mechanical interference with sheath 15, in particular with outer pipe 14.
Preferably, male portion 24 comprises protrusions 34, which in the example are of the "fir tree" type, on a radially external part thereof, for the purpose of improving friction with, and adhesion to, inner pipe 12.

Preferably, connector 22 is made as one piece. Preferably, connector 22 is made of polymeric material. Preferably, the radially external surface of male portion 24 is circular in shape.

Connector 22 comprises an inner cavity through which the fluid is intended to flow. Connector 22 comprises two apertures allowing the fluid to enter and exit connector 22, flowing through said cavity. When connector 22 is mounted to inner pipe 12, the cavity of connector 22 and the cavity defined by inner pipe 12 are in communication with each other, so that the fluid can flow between connector 22 and inner pipe 12.

In the example, connector 22 is an angular connector. Preferably, it 22 has two tracts 81, 82 in which the fluid is intended to flow. In particular, the two tracts 81, 82 are straight and angled, in particular at 90 degrees, to each other. However, in some possible variants such two straight tracts 81, 82 may be angled differently to each other. In particular, in a cross-sectional view, the radially internal surface of both tracts 81, 82 is circular in shape. Therefore, the two tracts 81, 82 define each a cylindrical cavity. Male portion 24 is associated with one of said two tracts 82.

The invention also concerns a system for transporting a fluid, comprising:
- a connection 20 according to any variant; and
- a fluid source configured to supply a fluid to be transported, and fluidically connected to connection 20, in particular to said inner pipe 12 of said pipeline 10 or to said connector 22.

The invention also concerns a motor vehicle equipped with said system.

The process for manufacturing a connection 20 for a fluid to be transported, in particular in a motor vehicle, comprises the following steps, preferably carried out in succession:
- providing inner pipe 12,
- extruding sheath 15 around inner pipe 12, in order to form pipeline 10,
- mounting closing means 26 over inner pipe 12, in particular by inserting inner pipe 12 into the cavity of closing means 26,
- inserting male portion 24 of connector 22 into inner pipe 12.

In particular, there is a step of placing sheath 10, specifically channels 16 and interspaces 17, in abutment with closing tract 32.

If a connection tract 28 is included, the step of inserting male portion 24 into inner pipe 12 will also cause said male portion 24 to be inserted into connection tract 28 in a radially internal position.

According to some embodiments, the step of mounting closing means 26 over inner pipe 12 also includes inserting sheath 10 into covering tract 30.

Closing means 26 can be fitted over inner pipe 12, or pipeline 10, and connector 22 by a machine and/or manually.

The details of connection 20 have already been described above; therefore, for brevity's sake, they will not be repeated.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Connection (20) for a fluid to be transported, in particular in a motor vehicle; said connection (20) comprising a pipeline (10) including:
- an inner pipe (12) configured to be crossed by said fluid to be transported, and
- a sheath (15) comprising:
- an outer pipe (14), and
- a plurality of tubular portions (18) defining channels (16);
wherein the tubular portions (18):
- are radially interposed between the inner pipe (12) and the outer pipe (14),
- are mutually spaced apart, thus forming interspaces (17);
said connection (20) is **characterized in that** it comprises:
- a connector (22) fluidically connected to the inner pipe (12), and comprising a male portion (24) inserted in the inner pipe (12),
- a closing means (26) for closing the channels (16) and the interspaces (17) at their axial ends, wherein the closing means (26) is located at one end of the pipeline (10) whereto the connector (22) is mounted.

2. Connection according to claim 1, wherein the closing means (26) surrounds a part of the inner pipe (12) and compresses it against the male portion (24) of the connector (22).

3. Connection according to claim 1, wherein an end portion of the inner pipe (12) surrounds the male portion (24), and the closing means (26) does not surround said end portion of the inner pipe (12) at the male portion (24).

4. Connection according to claim 2, wherein the closing means (26) comprises: a connection tract (28), which surrounds the inner pipe (12) at the male portion (24), and a closing tract (32) that closes the channels (16) and the interspaces (17).

5. Connection according to claim 4, wherein the closing means (26) comprises also a covering tract (30), which envelops a terminal part of the outer pipe (14).

6. Connection according to claim 3, wherein the closing means (26) comprises: a covering tract (30), which envelops a terminal part of the outer pipe (14), and a closing tract (32), which closes the channels (16) and the interspaces (17).

7. Connection according to claim 5 or according to claim 6, including fixing means located on a radially internal surface of the covering tract (30), to increase the interference with the sheath (15) of the pipeline (10).

8. Connection according to any one of the preceding claims, wherein the closing means (26) has a cylindrical or annular shape.

9. Connection according to any one of the preceding claims, wherein the tubular portions (18):
- extend in a prevalently longitudinal direction of said outer pipe (14),
- are made as one piece with the outer pipe (14).

10. Connection according to any one of the preceding claims, wherein the tubular portions (18) are arranged in a spiral fashion relative to a longitudinal axis of the pipeline (10).

11. Connection according to any one of the preceding claims, wherein the closing means (26) comprises a closing tract (32) in abutment with ends of the channels (16) and of the interspaces (17), so as to close said channels (16) and interspaces (17).

12. System for transporting a fluid, comprising:
- a connection (20) according to any one of the preceding claims; and
- a fluid source configured to supply a fluid to be transported, and fluidically connected to said inner pipe (12) of said pipeline (10) or to said connector (22).

13. Motor vehicle comprising a system according to claim 12.

14. Process for making a connection (20) according to any one of claims 1 to 11, comprising the following steps:
- providing the inner pipe (12),
- extruding the sheath (15) around the inner pipe (12), in order to form the pipeline (10),
- mounting the closing means (26) over the inner pipe (12),
- inserting the male portion (24) of the connector (22) into the inner pipe (12).
